# EUROPEAN PATENT APPLICATION

(11) **EP 4 725 348 A2**
(43) Date of publication of application: **15.04.2026**
(21) Application number: 26160317.9
(22) Date of filing: 06.01.2023
(51) Int. Cl.: A41D 27/28, A41D 31/102, A41D 31/12, A41D 31/14, B32B 3/26, B32B 5/02, B32B 27/12, B32B 27/36

(54) **DYNAMIC VENT STRUCTURE FOR APPAREL**

(30) Priority: 06.01.2022 US 202263266470 P; 05.01.2023 US 202318093566
(62) Divisional of application: 23703959.9
(71) Applicant: NIKE Innovate C.V., Beaverton, Oregon 97005 (US)
(72) Inventor: KOSHKAROFF, Iustinia, Beaverton, Oregon, 97005 (US); MORGAN, Daniel P., Beaverton, Oregon, 97005 (US); SCHEPKE, Kyle, Beaverton, Oregon, 97005 (US); WILLIAMS, Joshua Patrick, Beaverton, Oregon, 97005 (US); YASHKOVA, Nina, Beaverton, Oregon, 97005 (US)
(74) Representative: Müller-Boré & Partner Patentanwälte PartG mbB

(57) **Abstract**

An apparel item comprises a trim piece secured to at least a first portion of the apparel item. The trim piece comprises a composite structure comprising a substrate layer, and a film layer that dimensionally transforms when exposed to moisture, the film layer secured to a first surface of the substrate layer, the composite structure including a plurality of slits that extend through a thickness of the composite structure. The apparel item further comprises a cover piece positioned external to the trim piece and adapted to partially or completely overlie the trim piece with its plurality of slits, wherein, after the trim piece is exposed to moisture, one or more flaps formed by the plurality of slits extend outwardly.

## Description

### FIELD OF THE INVENTION

Aspects herein are directed to a vent structure for apparel that is responsive to an external stimulus to dynamically transition the vent structure from a closed state to an open state.

### BACKGROUND OF THE INVENTION

Vent structures on traditional articles of apparel generally open and close through use of a mechanical structure that requires human manipulation such as a zipper or fastener, passively open and close in response to air flowing in or out of the vent structure, or exist in a static state such as always open.

### SUMMARY OF THE INVENTION

The following clauses represent example aspects of concepts contemplated herein. Any one of the following clauses may be combined in a multiple dependent manner to depend from one or more other clauses. Further, any combination of dependent clauses (clauses that explicitly depend from a previous clause) may be combined while staying within the scope of aspects contemplated herein. The following clauses are examples and are not limiting.

Clause 1. A trim piece for use in apparel, the trim piece comprising: a composite structure comprising a substrate layer and a film layer that dimensionally transforms when exposed to moisture, the film layer secured to a first surface of the substrate layer, the composite structure including a plurality of slits that extend through a thickness of the composite structure.

Clause 2. The trim piece according to clause 1, further comprising a support layer secured to the composite structure, the support layer in a face-sharing relationship with the film layer.

Clause 3. The trim piece according to any of clauses 1 and 2, wherein the substrate layer includes one of a knit textile or a woven textile.

Clause 4. The trim piece according to any of clauses 1 through 3, wherein the film layer is a thermoplastic material.

Clause 5. The trim piece according to clause 4, wherein the thermoplastic material is a polyester elastomer (TPEE).

Clause 6. The trim piece according to any of clauses 1 through 5, wherein an entirety of the film layer is secured to the first surface of the substrate layer.

Clause 7. The trim piece according to any of clauses 1 through 6, wherein the film layer is bonded to the substrate layer.

Clause 8. The trim piece according to any of clauses 1 through 7, wherein the support layer is secured to the composite structure along one or more perimeter edges of the support layer.

Clause 9. The trim piece according to any of clauses 1 through 8, wherein the support layer includes one of a mesh material or a spacer mesh material.

Clause 10. The trim piece according to any of clauses 1 through 9, wherein the support layer includes a fleece material.

Clause 11. The trim piece according to clause 10, wherein the fleece material includes one or more openings, at least a portion of the one or more openings axially aligned with at least a portion of the plurality of slits.

Clause 12. An apparel item comprising: a trim piece secured to at least a first portion of the apparel item, the trim piece comprising: a composite structure comprising a substrate layer and a film layer that dimensionally transforms when exposed to moisture, the film layer secured to a first surface of the substrate layer, the composite structure including a plurality of slits that extend through a thickness of the composite structure.

13. The apparel item according to clause 12, further comprising a support layer secured to the composite structure, a first surface of the support layer in a face-sharing relationship with the film layer.

Clause 14. The apparel item according any of clauses 12 and 13, wherein the apparel item is a bra and the trim piece is secured to a lower margin of a front portion of the bra such that the trim piece forms an underband of the bra.

Clause 15. The apparel item according to any of clauses 12 and 13, wherein the apparel item is a jacket.

Clause 16. The apparel item according to clause 15, wherein the trim piece is secured between and spaces apart a first baffle containing a thermally insulating fill material and a second baffle containing a thermally insulating fill material.

Clause 17. The apparel item according to any of clauses 12 through 16, wherein an opposite second surface of the support layer is configured to be in a face-sharing relationship with a body surface of a wearer when the apparel item is worn.

Clause 18. The apparel item according to any of clauses 12 through 17, wherein when the film layer is exposed to moisture, one or more flaps formed by the plurality of slits extend in a z-direction away from the support layer.

Clause 19. The apparel item according to any of clauses 12 through 18, wherein the substrate layer includes one of a knit textile or a woven textile.

Clause 20. The apparel item according to any of clauses 12 through 19, wherein the film layer is a thermoplastic material.

Clause 21. The apparel item according to clause 20, wherein the thermoplastic material is a thermoplastic polyester elastomer (TPEE).

Clause 22. The apparel item according to any of clauses 12 through 21, wherein the film layer is bonded to the substrate layer.

Clause 23. A method of forming a trim piece for use in apparel, the method comprising: forming a plurality of slits through a thickness of a composite structure comprising a substrate layer and a film layer that dimensionally transforms when exposed to moisture, the film layer secured to a first surface of the substrate layer; and securing a support layer to the composite structure such that a first surface of the support layer is in a face-sharing relationship with the film layer.

Clause 24. The method of forming the trim piece according to clause 23, wherein the support layer includes one of a mesh material, a spacer mesh material, or a fleece material.

Clause 25. A composite laminate comprising: a substrate layer; a film layer that is a coupled to the substrate layer and that dimensionally transforms when exposed to moisture; and a slit extending entirely through at least the film layer, wherein the slit forms at least part of a through-passage through at least the film layer and wherein one side of the composite laminate is in fluid communication with the other side of the composite laminate through the through-passage.

Clause 26. The composite laminate according to claim 25, wherein: a portion of the film layer proximate to the slit transitions from a first position to a second position when the film layer is exposed to moisture; and wherein the through passage is larger laminate, as compared to when the portion is in the first position..

Clause 27. The composite laminate according to claim 26, wherein, in the second position, the through-passage increases airflow between the first and the second sides of the composite laminate, as compared to when the portion is in the first position.

Clause 28. The composite laminate according to any of claims 26 and 27, wherein the through passage decreases in size when moisture is removed from the film layer.

Clause 29. The composite laminate according to any of claims 26 through 28, wherein when the film layer is exposed to moisture, one or more flaps formed by the plurality of slits extend away from the support layer.

Clause 30. The composite laminate according to any of claims 25 through 29, wherein the slit comprises an edge of a portion of the composite laminate; and along the edge, the film layer is at least partially bonded to the substrate layer.

Clause 31. The composite textile according to any of clauses 25 through 30 wherein: the film layer is comprises a machine direction and a cross direction, and wherein the slit is disposed on the film such that the slit is not parallel to the cross direction of the film.

Clause 32. The composite laminate according to clause 31, wherein the slit is a first slit and said composite textile further comprises a second slit made through at least said film that intersects the first slit at an angle.

Clause 33. The composite laminate according to clause 32, wherein the first slit is perpendicular to the cross direction of the film and the second slit is parallel to the cross direction of the film.

Clause 34. The composite laminate according to clause 33, wherein the slits form a plurality of portions that move to a substantially same extent when the film layer is exposed to moisture.

Clause 35. The composite laminate according to any of clauses 32 through 34, wherein, when exposed to moisture, an edge of the composite laminate associated with the first slit moves to a larger extent in a z-direction than an edge of the composite laminate associated with the second slit.

Clause 36. The composite laminate according to any of clauses 31 through 35, wherein the substrate layer is a textile and comprises a machine direction and a cross direction, and the machine direction of the film layer is parallel to the machine direction of the textile.

Clause 37. The composite laminate according to any of clause 31 through 35, wherein the substrate layer is a textile and comprises a machine direction and a cross direction, and the machine direction of the film layer is parallel to the cross direction of the textile.

Clause 38. The composite laminate according to any of clauses 31 through 35, wherein the subtrate layer is a textile and comprises a machine direction and a cross direction, and the machine direction of the film layer is angled relative to the machine direction of the textile.

Clause 39. The composite laminate according to any of clauses 25 through 38, wherein the textile comprises a knit material.

Clause 40. The composite laminate according to any of clauses 25 through 38, wherein the textile comprises a non-woven material.

Clause 41. The composite laminate according to any of clauses 25 through 38, wherein the textile comprises a woven material.

Clause 42. The composite textile according to any of clause 32 through 41, wherein the slit and the second slit are associated with one or more of a T-shape, an L-shape, a plus-sign shape, an X-shape, and any combination thereof.

Clause 43. The composite textile according to any of clauses 25 through 42, wherein the slit is associated with a curvilinear profile.

Clause 44. An upper-body garment comprising: a composite laminate comprising: a substrate layer comprising an inner face and an outer face; a film layer that is secured to the inner face of the substrate layer and that dimensionally transforms when exposed to moisture; and a plurality of slits that extend through a thickness of the film layer; and an outer layer proximate to the outer face of the substrate layer.

Clause 45: The upper-body garment according to clause 44, wherein the upper-body garment includes a back portion configured to cover a back of a wearer when the upper-body garment is worn, and wherein the composite laminate is positioned in an upper region of the back portion.

Clause 46: The upper-body garment according to any of clauses 44 through 45 further comprising, an inner lining adjacent the film layer and configured to be positioned between the film layer and a wearer when the upper-body garment is worn.

Clause 47: The upper-body garment according to any of clauses 44 through 46, wherein the outer layer comprises a durable water repellant (DWR) surface treatment on an outer face.

Clause 48: The upper-body garment according to any of clauses 44 through 47, wherein the outer layer comprises a bottom edge, which comprises at least a segment that is positioned lower that the plurality of slits.

Clause 49: A garment comprising: a composite structure comprising: a substrate layer and a film layer that dimensionally transforms when exposed to moisture, the film layer secured to a first surface of the substrate layer, the composite structure including a plurality of slits that extend through a thickness of the composite structure; and a support layer secured to the composite structure, the support layer in a face-sharing relationship with the film layer.

Clause 50. The garment according to clause 49, wherein the film layer is a thermoplastic material.

Clause 51. The garment according to clause 50, wherein the thermoplastic material is a thermoplastic polyester elastomer (TPEE).

Clause 52. The garment according to any of clauses 49 through 51, wherein the garment is an upper body garment and the composite structure is positioned in an upper back portion.

Clause 53. The garment according to any of clauses 49 through 52, wherein the support layer includes one of a mesh material or a spacer mesh material.

Clause 54. The garment according to any of clauses 49 through 53, wherein the support layer includes one or more openings, at least a portion of the one or more openings axially aligned with at least a portion of the plurality of slits.

### BRIEF DESCRIPTION OF THE DRAWING

Examples of aspects herein are described in detail below with reference to the attached drawing figures, wherein:
FIG. 1 illustrates a perspective view of a first face of a portion of a trim piece having a dynamic vent structure before the trim piece is exposed to an external stimulus in accordance with aspects herein;
FIG. 2 illustrates a cross-section of the trim piece of FIG. 1 taken at cut line 2-2 of FIG. 1 in accordance with aspects herein;
FIG. 3 illustrates a perspective view of the first face of the portion of the trim piece of FIG. 1 after the trim piece has been exposed to the external stimulus in accordance with aspects herein;
FIG. 4 illustrates a perspective view of a first example opposite second face of the trim piece of FIG. 1 in accordance with aspects herein;
FIG. 5 illustrates a perspective view of a second example opposite second face of the trim piece of FIG. 1 in accordance with aspects herein;
FIG. 6 illustrates a cross-section of the trim piece of FIG. 5 taken at cut line 6-6 of FIG. 5 in accordance with aspects herein;
FIG. 7 illustrates the trim piece of FIG. 1 applied to an apparel item in the form of a bra before the trim piece is exposed to an external stimulus in accordance with aspects herein;
FIG. 8 illustrates the bra of FIG. 7 after the trim piece is exposed to the external stimulus in accordance with aspects herein;
FIG. 9 illustrates the trim piece of FIG. 1 applied to an apparel item in the form of an upper-body garment before the trim piece is exposed to an external stimulus in accordance with aspects herein;
FIG. 10 illustrates a cross-section of a baffle containing a thermally insulating fill material in accordance with aspects herein;
FIG. 11 illustrates the upper-body garment of FIG. 9 after the trim piece is exposed to the external stimulus in accordance with aspects herein;
FIG. 12 illustrates a perspective cross-sectional view of an example vent structure incorporating the trim piece of FIG. 1 and a cover piece before the trim piece has been exposed to an external stimulus in accordance with aspects herein;
FIG. 13 illustrates a side view of the example vent structure of FIG. 12 in accordance with aspects herein;
FIG. 14 illustrates a side view of the example vent structure of FIG. 12 after the trim piece has been exposed to the external stimulus in accordance with aspects herein;
FIG. 15 illustrates a flow diagram of an example method of forming a trim piece, such as the trim piece of FIG. 1 in accordance with aspects herein;
FIGS. 16A-16C illustrate an upper-body garment with a composite-layer panel, in accordance with aspects herein;
FIGS. 17A-J illustrate a top view of different examples of slit shapes in accordance with aspects herein;
FIG. 18A illustrates a top view of a slit grouping having one slit perpendicular to a machine direction of the film layer and one slit parallel to the machine direction of the film layer, before exposure to stimulus.
FIG. 18B illustrates a top view of a slit grouping orthogonal to each other, with both slits angled 45 degrees with a machine direction of the film layer, before exposure to stimulus.
FIG. 18C illustrates a top view of the slit grouping of FIG. 18A after exposure to stimulus.
FIG. 18D illustrates a top view of the slit grouping of FIG. 18B after exposure to stimulus.FIG. 19A illustrates a top view of a single slit parallel to a machine direction of the film layer before exposure to stimulus.
FIG. 19B illustrates a top view of a single slit perpendicular to a machine direction of the film layer before exposure to stimulus.
FIG. 19C illustrates a top view of the single slit of FIG. 19A after exposure to stimulus.
FIG. 19D illustrates a top view of the single slit of FIG. 19B after exposure to stimulus.

### DETAILED DESCRIPTION OF THE INVENTION

The subject matter of the present invention is described with specificity herein to meet statutory requirements. However, the description itself is not intended to limit the scope of this disclosure. Rather, the inventors have contemplated that the claimed or disclosed subject matter might also be embodied in other ways, to include different steps or combinations of steps similar to the ones described in this document, in conjunction with other present or future technologies. Moreover, although the terms "step" and/or "block" might be used herein to connote different elements of methods employed, the terms should not be interpreted as implying any particular order among or between various steps herein disclosed unless and except when the order of individual steps is explicitly stated.

Vent structures on traditional articles of apparel often open and close through use of a mechanical structure that requires human manipulation such as a zipper or fastener, passively open and close in response to air flowing in or out of the vent structure, or exist in a static state such as always open.

Aspects herein provide for a vent structure that dynamically transitions (e.g., without manual operation or manipulation) from a closed state to an open state in response to exposure to an external stimulus such as, for example, moisture in the form of perspiration. When the external stimulus is removed, the vent structure dynamically transitions back to a closed state. This allows needed venting when, for example, a wearer is exercising and a decrease in venting when the wearer is at rest without any manipulation of the vent structure by the wearer.

In example aspects, the vent structure may be in the form of a trim piece or a composite textile (e.g., textile panel) that is adapted to be applied or secured to an article of apparel. The trim piece includes a composite structure, which may be a laminate, having a substrate layer, which may include a knit, non-woven material, or woven material, and a film layer that is secured or bonded to the substrate layer. One or more slits extend through both the substrate layer and the film layer. The film layer is formed of a material that dimensionally transforms when exposed to an external stimulus such as moisture. In example aspects, the film layer may swell which causes flaps formed by the one or more slits to extend in a z-direction away from the film layer. The opening of the flaps creates through-passages that extend through the thickness of the composite structure. Moisture vapor and/or heat generated by a wearer may be dissipated by way of the through-passages, and air from the external environment may travel through the composite structure by way of the through-passages to further help cool the wearer.

In example aspects, an optional support layer may be secured to the composite structure such that a first surface of the support layer is in a face-sharing relationship with the film layer. The support layer may provide structural support to the trim piece. In example aspects, the support layer may be a mesh material or a spacer mesh material that is permeable to air and/or moisture vapor. In other example aspects, the support layer may be a fleece material to provide warmth and/or insulative features to the trim piece. In this example, because fleece is not as inherently permeable to air and/or moisture vapor as a mesh material or a spacer mesh material, the fleece material may include one or more openings that are axially aligned with at least a portion of the plurality of slits formed through the composite structure. As such, when the flaps formed by the slit(s) open, air and/or moisture vapor may travel through the openings in the fleece material and through the through-passages of the composite structure.

In example aspects, the trim piece may be incorporated into a support garment such as a bra including a sport bra. For instance, the trim piece may form an underband portion of the bra and be configured to extend around a wearer's torso. In this example, the support layer may be a lightweight mesh or a spacer mesh material. The support layer may be positioned adjacent to a skin surface of the wearer, the substrate layer faces outward or externally, and the film layer is positioned between the support layer and the substrate layer. When the wearer begins exercising and generating perspiration, the perspiration and/or moisture vapor passes through the mesh or spacer mesh material and comes into contact with the film layer. The film layer swells which causes the flaps formed by the one or more slits to extend outward in a direction away from the support layer. The resulting through-passages facilitate the movement of moisture vapor and/or heat away from the wearer's body and to the external environment thus helping to cool the wearer. When the wearer is done exercising, the film layer returns to its resting state and the flaps close.

**In** example aspects, the trim piece may also be incorporated into an upper-body garment including an upper-body garment designed to be worn during various weather conditions, including precipitation (e.g., rain, snow, etc.), cold, and/or all-weather conditions. In this example, the upper-body garment may include baffles filled with a thermally insulating fill material to provide warmth features to the upper-body garment. The trim piece may be positioned between one or more adjacent baffles. The support layer, in this example, may be a fleece material to further provide warmth to the upper-body garment, where the fleece material includes openings that axially align with the plurality of slits formed through the composite structure. The substrate layer may, in example aspects, be a tightly woven material to provide wind protection. In example aspects, a durable water repellant may be applied to the substrate layer to impart water repellency features to the trim piece. As above, the support layer may be positioned adjacent to a skin surface of the wearer, the substrate layer faces outward or externally, and the film layer is positioned between the support layer and the substrate layer. In instances where the wearer generates perspiration and/or moisture vapor, the perspiration and/or moisture vapor passes through the openings in the fleece material and comes into contact with the film layer. The film layer swells which causes the flaps formed by the plurality of slits to extend outward in a direction away from the support layer. The resulting through-passages facilitate the movement of moisture vapor and/or heat away from the wearer's body and to the external environment thus helping to cool the wearer. When the wearer is at rest and no longer producing perspiration and/or moisture vapor, the flaps close and heat is retained thereby promoting wearer warmth.

In example aspects, a cover piece may be positioned external to the trim piece and adapted to partially or completely overlie the trim piece with its plurality of slits. The cover piece may prevent precipitation from the external environment from entering the article incorporating the trim piece by way of the plurality of slits. When the flaps on the trim piece open, the flaps mechanically push the cover piece outward so that the cover piece does not obstruct movement of air or moisture vapor through the through-passages while still preventing precipitation from the external environment from entering the article by way of the through-passages.

In example aspects, the composite structure (which may include film, substrate and support layers) can be incorporated into one or more panels of a garment, such as the upper back portion of a jacket. In this example, the jacket may be formed with a multi-layer construction, which may include an outer layer that can act as a cover to the composite panel. The outer layer may be designed with drape characteristics that allow it to act as a shield against precipitation or other environmental elements from entering the jacket through the passages in the panel while fitting loosely enough to allow the flaps of the composite panel to open to allow for venting.

The term "article" or "article of apparel" as used herein encompasses any number of products meant to be worn by a wearer including upper-body garments (e.g., shirts, jackets, hoodies, pullovers), lower-body garments (e.g., pants, shorts, leggings), articles of footwear such as shoes or socks, articles of headwear (e.g., hats), gloves, sleeves (e.g., arm sleeves, calf sleeves), and the like. Positional terms used when describing the article of apparel such as front, back, inner-facing surface, outer-facing surface, upper, lower, proximal, distal, medial, lateral, and the like are with respect to the article of apparel being worn as intended with the wearer standing upright. As such, when the article of apparel is in the form of an upper-body garment or a lower-body garment, the front of the article of apparel is configured to cover, for instance, a front torso area, a front arm area, or a front leg area of the wearer, and the back of the article of apparel is configured to cover the back torso area, the back arm area, or the back leg area of the wearer. Similarly, the inner-facing surface of the article of apparel is configured to be positioned adjacent to a wearer's skin surface or a base layer, and the outer-facing surface of the article of apparel is configured to face toward the external environment. The term "innermost-facing surface" means the layer of an article that is positioned closest to a skin surface of a wearer with respect to the other layers of the article, and the term "outermost-facing surface" means the layer of an article that is positioned farthest away from the skin surface of the wearer with respect to the other layers of the article.

The term "trim piece" as used herein means a structure that is adapted to be applied to an article of apparel when forming the article of apparel. The trim piece may be in the form of a strip having a length that is generally greater than the strip width. The trim piece may also be in different forms such as a panel. Any and all aspects, and any variation thereof, are contemplated as being within the scope herein.

The term "z-direction" as used herein means a direction that extends away from the surface of the trim piece and/or article of apparel in a positive or negative direction. The terms "x-direction" and "y-direction" mean a direction extending along the surface of the trim piece and/or article of apparel.

The term "dimensional transformation" as used herein means a change or alteration in one or more dimensions, such as in an x-direction or axis, y-direction or axis, and/or z-direction or axis. For example, an object may undergo a dimensional transformation by expanding, shrinking, folding, bending, curling, lifting, relaxing, and/or straitening along a length, width and/or height.

The term "axially aligned" as used herein means that an axis of a feature is parallel or co-linear with the axis of another feature, as the term is understood in the art.

The term "external stimulus" as used herein encompasses any number of stimuli such as temperature, pressure, moisture, electrical energy, magnetic energy, light, sound, and the like. In one example aspect, the external stimulus is moisture where the moisture can be in the form of liquid water, water or moisture vapor, perspiration, and the like.

The term "through-passage" as used herein means an opening formed in the trim piece and/or article of apparel that provides a fluid (e.g., vapor, gas, liquid) communication path between the external environment and the interior of the article of apparel (e.g., the space between the inner-facing surface of the article of apparel and the wearer's body). The term "dynamic" or "dynamically" used when describing the vent structure transitioning from a closed state to an open state or vice versa generally means a self-generated mechanical action that occurs without human manipulation or operation of the vent structure.

The term "composite" as used herein means a material that comprises two or more constituent materials. The constituent materials may have different properties and when combined create a material with properties different from the individual materials.

The term "laminate" as used herein means a structure that has at least two layers coupled to each other (e.g., two or more layers of the same material or different materials). The coupling of layers may be achieved in various ways, such as chemical adhesive, ultrasonic welding, thermal bonding, mechanical fastening (e.g., stiching) or other known techniques. **In** some examples, a laminate may include a composite, and vice-versa.

In example aspects, the "film layer" described herein may comprise a thermoplastic material, which may include one or more of thermoplastic polymer materials and thermoplastic elastomer materials. For example, the film layer may comprise a thermoplastic polyester elastomer (TPEE). In example aspects, the film layer may include a hygroscopic material that is embedded in or is mixed with the thermoplastic material. For example, a TPEE film layer may include polyethylene glycol, sodium polyacrylate, and the like. Because of the presence of a hygroscopic material, the film layer swells in one or more of a z-direction, an x-direction, and a y-direction when exposed to moisture.

The term "mesh material" as used herein means any textile that has a permeable texture. The permeable texture may be imparted through a loose weave structure, a loose knit structure, perforating the textile with holes, and the like. The resulting textile has a large number of holes per inch making it highly permeable to air. The term "spacer mesh material" as used herein means a material (knit or woven) having a face layer and a back layer connected by yarns that extend generally orthogonal to the face layer and the back layer. The term "fleece material" as used generally means a textile having a napped surface that has good insulating properties.

Unless otherwise noted, all measurements provided herein are with the trim piece and/or article of apparel in an un-worn, resting state and at standard ambient temperature and pressure.

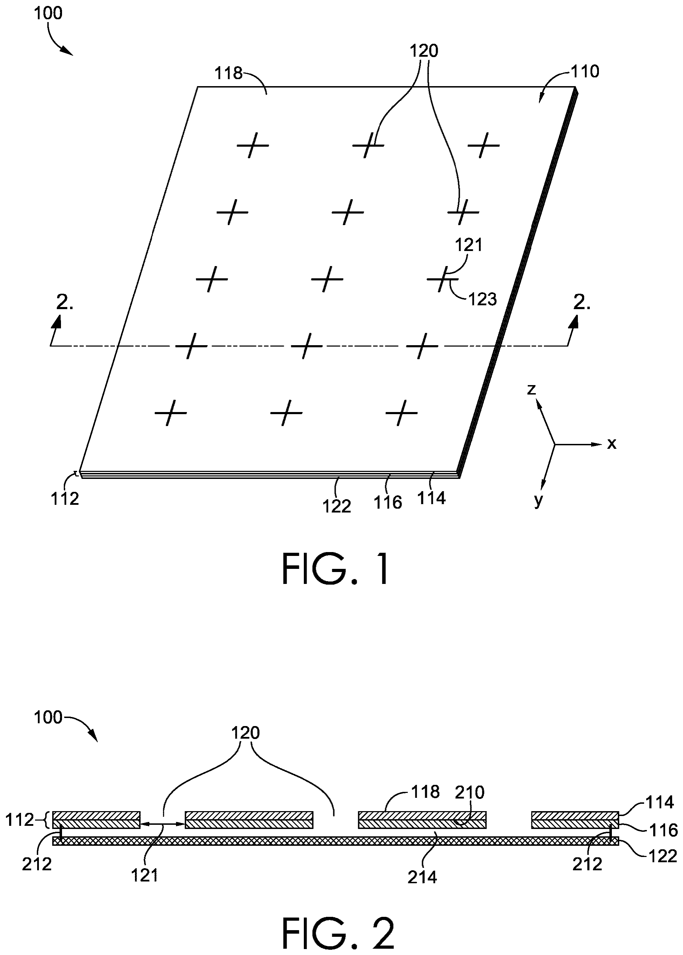

FIG. 1 is a perspective view of a first face 110 of a portion of a trim piece 100. In some examples, the trim piece 100 can be constructed as a multi-layer composite textile of different materials that is in a roll or sheet form. In addition, a section can be cut from the trim piece 100 for incorporation into an article of apparel. For example, the section cut from the trim piece 100 can be affixed along an edge, opening, cuff, etc. In addition, the section can be affixed onto another panel or section of the article of apparel. In some examples, the section can form a wall or panel of the article of apparel (e.g., without necessarily being layered with another textile panel). In some examples, the trim piece 100 can comprise a textile (e.g., a multi-layer composite textile).

The trim piece 100 includes a composite structure 112 having a substrate layer 114 and a film layer 116 secured to a first surface of the substrate layer 114 (better seen in FIG. 2). An opposite second surface 118 of the substrate layer 114 forms the first face 110 of the trim piece 100. The substrate layer 114, in example aspects, may include a knit construction, a woven construction, a nonwoven construction, a braid construction, and the like. In some example aspects, the substrate layer 114 may include one or more coatings or finishes such as, for example, a durable water repellant finish, applied to the opposite second surface 118. In example aspects, an entirety (i.e., an entire surface) of the film layer 116 is secured to the substrate layer 114 by bonding. For example, the film layer 116 may be secured to the substrate layer 114 by melting such that the film layer 116 penetrates, or at least partially penetrates, through at least the first surface of the substrate layer 114. Other ways of securing the film layer 116 to the substrate layer 114 are contemplated herein including using an adhesive, point bonding, and the like. In some example aspects, the film layer is uniform in thickness. In other example aspects, the film layer 116 may have one or more gaps in a uniform, gradient, or random pattern. In yet another example aspect, the film layer 116 may comprise a plurality of discrete nodes secured to the substrate layer 114. The nodes may be located, for example, in the same places along the substrate layer 114 that have the one or more slits described herein (e.g., a circular, ovular, square, rectangular, etc. node of the film can at least partially overlap with the slit(s)).

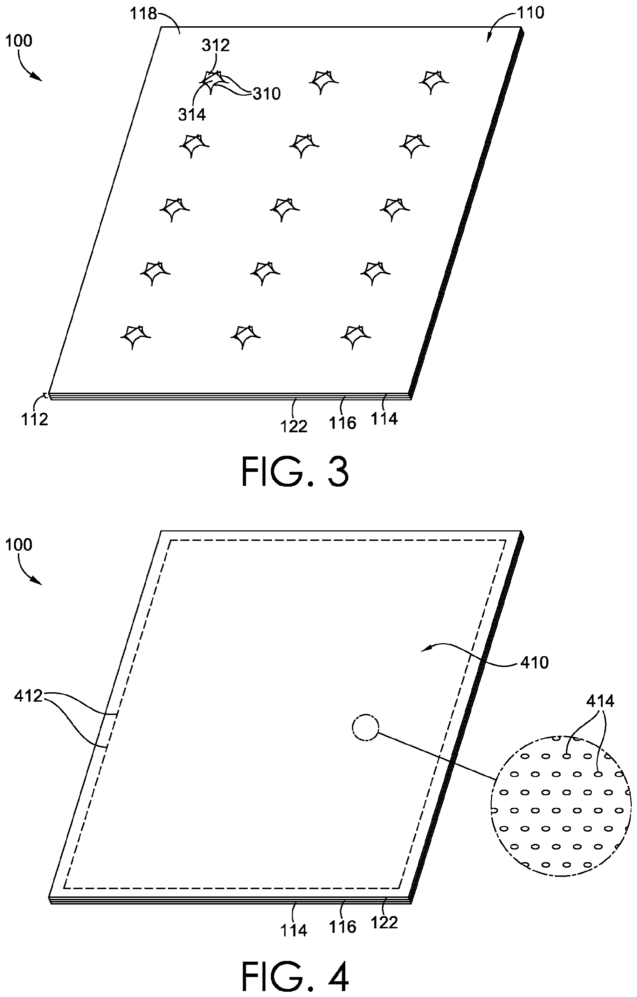

A plurality of slits 120 extend through a thickness of the composite structure 112. In example aspects, the plurality of slits 120 may include a pattern having a first linear slit 121 and a second linear slit 123 that bisects or intersects the first linear slit 121 to form a "plus" shape. Other example shapes are contemplated herein, including single slits, other patterns or shapes of two slits intersecting with one another, and/or other patterns or shapes of more than two slits intersecting with one another. In examples, a slit can be linear, curved, or curvilinear. In examples, a slit that extends entirely through the thickness of the composite material is associated with (e.g., forms) an edge of a portion of the composite, and a result of the slit is that a flap (e.g., multiple flaps) is formed. In at least some examples, when the film layer 116 is exposed to moisture, the edge of the flap lifts or curls away from the slit and/or a point of intersection of multiple slits as described below and as depicted in FIG. 3. The spacing and number of the plurality of slits 120 shown in FIG. 1 is illustrative only, and other spacing arrangements as well as a different number of slits is contemplated and within the scope herein. The stiffness of the substrate 114, and introducing areas and/or lines of strength or weakness in the substrate 114 (e.g., reinforcement ribs or score lines), may alter the nature of the curling of the flap 310, or cause it to act more like it is folding along a hinge at the base of the flap with substantial curling along its length.

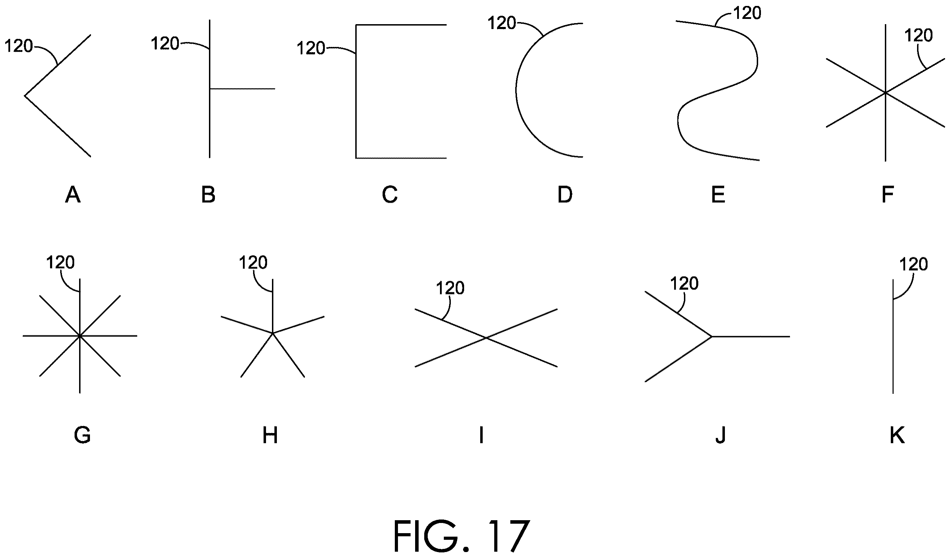

FIGS. 1-3 depict some examples of slit configurations. In examples, the slits 120 can include a variety of different configurations. For example, FIG. 17 illustrates several other slit "shapes" that demonstrate a wide variety of configurations that may be used. For example, as shown in FIGS. 17A-B, one or more slits 120 may connect only at the end of one of the slits 120 to form a "T" or "L" shape (or an "I" shape or an "H" shape - not illustrated). In at least some examples, as depicted by FIGS. 17C-E, a slit configuration can include an ear or tab shape, which can be formed by a single curved slit 120 (e.g., C-shaped or S-shaped) or can include multiple slits 120 that are end to end at different orientations. FIGS. 17F-H shows shapes formed by three, four or five slits 120 intersecting or connecting with each other to form "star" patterns. FIGS. 17I-J illustrate other configurations, such as an X-shape and a Y-shape. In these examples as well, the flaps that are formed by the one or more slits 120 can dimensionally transform when exposed to moisture or some other external stimulus. In at least some examples, the slit configuration can include a single straight slit 120 (e.g. FIG. 17K), in which at least one of the edges on either side of the slit 120 (e.g., and the portion of the composite structure associated with that edge) dimensionally transforms when the film layer 116 is exposed to stimulus (e.g., moisture), such as by puckering or gaping. In the above examples, the slits 120 may be formed in the composite structure 112 of the example shown in FIG. 1 having a substrate layer 114 and a film layer 116 or any other other composite structures described in or equivalent to the subject matter of this disclosure.

The spacing between the slit shapes may be determined based on balancing a number of factors, including durability and the amount of venting desired. For example, decreasing the spacing between slit grouping may maximize the amount of venting per area, but may result in an increased weakness in the composite structure 112. In example aspects, the spacing between slit groupings may be between 0.2 and 0.5 inches.

The plurality of slits 120 can be formed using various techniques. For instance, in some examples, the plurality of slits can be formed by cutting them into the composite structure 112 with a laser or other heated instrument. In some instances, the heat from the laser or other heated instrument can at least partially soften (e.g., melt) one or more of the film layer 116 and/or the substrate layer 114, and when the layer(s) re-solidify, the film layer 116 and the substrate layer 114 can be at least partially bound along the edge (e.g., cauterized). The plurality of slits 120 can be formed using one or more other techniques, such as with a die, stamp, blade, etc.

The trim piece 100 may optionally include a support layer 122 where the support layer 122 is in a face-sharing relationship with the film layer 116. As used herein, the term "face-sharing relationship" means that a planar surface of the film layer is in contact or near contact with or at least face-to-face with (e.g., without an intervening structure there between) a planar surface of the support layer. The support layer 122 can operate in various manners to provide one or more different functions. For example, the support layer 122 can impart structural support to the trim piece 100 as the plurality of slits 120 may impact the structural integrity of the composite structure 112. In some examples, the support layer 122 can be configured to provide a wearer-facing surface. As described above, the support layer 122 may include a mesh material, a spacer mesh material, a fleece material with openings, and the like.

FIG. 2 depicts a cross-section of the trim piece 100 taken at cut line 2-2 where cut line 2-2 is aligned along an axis of a portion of the plurality of slits 120. FIG. 2 depicts the film layer 116 secured to the first surface 210 of the substrate layer 114. In examples, the film layer 116 and the substrate layer 114 comprise the composite structure 112. In at least some examples, the film layer 116 is a distinct layer applied to the surface of the substrate layer 114. In at least some examples, the film layer 116 may be at least partially incorporated into the substrate layer 114 through, for example, melting. In some instances, the extent to which the film layer 116 is incorporated into the substrate layer 114 can affect the swell and/or reset time associated with the composite 112. For example, a composite 112 in which the film layer 116 is less incorporated into the substrate layer 114 (e.g., when the film layer 116 is applied to the surface) can operate differently than a composite 112 in which the film layer 116 is more incorporated into the substrate layer 114 (e.g., when the film layer 116 is at least partially melted). As such, in some instances, the extent to which the film layer 116 is impregnated into the substrate layer 114 can be controlled to accomplish a desired effect. The slits 120 can include various dimensions. For example, in some instances, the slits 120 include a length 121, which is in a range of between 1/8 to 5/8 inches. In some examples, the length 121 can be 0.5 inches.

In example aspects, the support layer 122 is secured to the composite structure 112 along one or more perimeter edges of the support layer 122. In one example, the support layer 122 may be secured to the composite structure 112 by way of stitching as shown by stitches 212 although other affixing technologies are contemplated herein including bonding, adhesives, and the like. In this example, a potential space 214 may be formed between portions of the support layer 122 and the composite structure 112. Aspects herein also contemplate that the support layer 122 may be secured to the composite structure 112 at areas interior to the perimeter edges of the support layer 122. Any and all aspects, and any variation thereof, are contemplated as being within aspects herein.

FIG. 3 depicts a perspective view of the first face 110 of the portion of the trim piece 100 of FIG. 1 after the trim piece 100 has been exposed to the external stimulus. In example aspects, the external stimulus may be moisture in the form of, for example, perspiration and/or moisture vapor produced by a wearer. The perspiration and/or moisture vapor contacts the film layer 116 and causes it to dimensionally transform such as by swelling in one or more of the x-direction, the y-direction, and/or the z-direction. The dimensional transformation of the film layer 116 causes flaps 310 formed by the plurality of slits 120 to extend in a z-direction away from the support layer 122. More particularly, at least an apex of the flaps 310, such as apex 312 curls away from a point of intersection of the slits 120. The curling of the flaps 310 creates a through-passage, such as through-passage 314 that extends through the thickness of the composite structure 112. Based on the film layer 116 being exposed to moisture, the flaps 310 can dimensionally transform, which can further increase the size of the through-passage 314. Determining whether a through-passage 314 has increased in size can be based on whether the distance between two points on opposing sides of the through passage 314 has increased. In some examples, as the film layer 116 increases in a percentage of saturation, the rate at which the film layer 116 swells may diminish. For example, the swelling associated with the film layer 116 might slow, or even stop, when the film layer 116 reaches a maximum saturation.

As indicated, when the film layer 116 is exposed to moisture the flaps 310 may dimensionally transform, causing an incrase in the size of the through-passage 314. In some examples a through-passage 314 that has increased in size may allow additional airflow to pass through from one side of the composite structure 112 to the other. An increase in airflow can contribute to an increase in breathability or cooling effect of a garment including the composite structure 112. Conversely, when moisture is removed from the film layer 116, the through-passage 314 may decrease in size, thereby restricting airflow between the sides of the composite structure 112.

When the film layer 116 is no longer exposed to perspiration and/or moisture vapor, the film layer 116 returns to its resting state (i.e., undergoes a decrease in dimension in one or more of the x-direction, the y-direction, and/or the z-direction) as moisture is removed from the film layer (e.g., via evaporation) and the flaps 310 transition to a closed state such as that shown in FIG. 1. In this state, the flaps 310 are generally planar with respect to one another.

In examples, the operation of the flaps 310 (e.g., rate of opening/closing and the extent to which the flaps 310 open) can depend on a variety of different factors. In some examples, the operation can depend, at least in part, on the intensity of the external stimulus, such as, the amount and nature of moisture contacting the film layer or, conversely, the rate of evaporation. In addition, different configurations of the flaps (e.g., the number and size of the flaps) may affect the rate of absorption/evaporation. For example, a smaller flap can, in some cases, be associated with less surface area (as compared with a larger flap), which can translate to less moisture needing to evaporate, and in turn, a faster resent time (e.g., relaxing, uncurling, straightening, etc.). Based on this, a plus-sign slit configuration (e.g., with two intersecting slits) might, in some cases, reset slower than a star slit configuration with three intersecting slits, and slit configuration can be tuned to achieve faster or slower reset times for different applications.

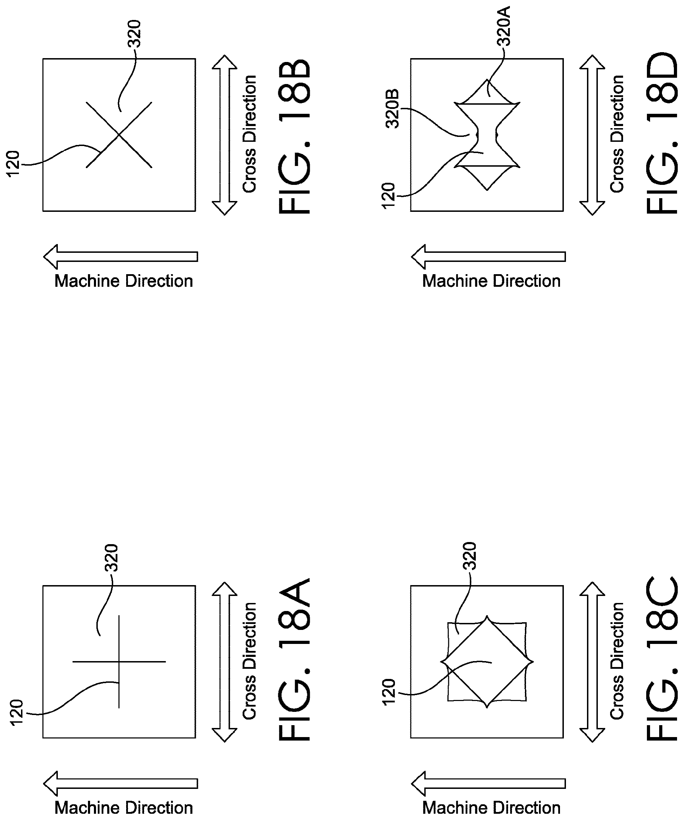

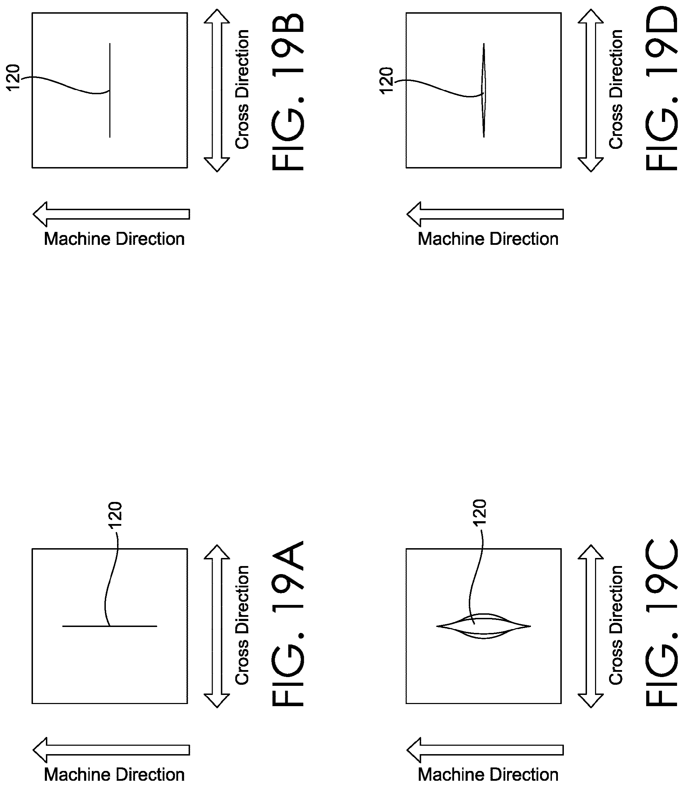

In addition, the operation of the flaps 310 can depend on the configuration and characteristics of the substrate layer 114, as well as the thickness and orientation of the film layer 116. For example, the film layer 116 may tend to swell more rapidly, or to a greater extent, in one or more of the x-direction, y-direction, and/or z-direction, depending on how it was manufactured. For example, in a film manufactured via blown extrusion, due to the resulting alignment of the crystal structure in the film, the film may be configured to expand more in the weft or cross direction (perpendicular to the extrusion direction) than in the machine direction (parallel to the extrusion direction). In example aspects, the orientation of such a film layer 116 in relation to the orientation of the plurality of slits 120 may affect the nature, shape, speed and/or extent of the curling of the various flaps 310 when the film layer is exposed to an external stimulus. For example, as shown in FIGS. 18A-D, orienting a "plus" slit grouping so that one of the slits 120 is parallel with the machine direction of a film that exhibits greater expansion in the cross direction (FIG. 18A) will tend to have flaps 320 that open more uniformly (FIG. 18C) than when the slits 120 are oriented at a 45 degree angle to the machine and cross directions (FIGS. 18B and D). In the latter situation, the flaps that open in the cross direction 320A often curls more and/or faster than the flaps that open in the machine direction 320B. In another example as shown in FIGS. 19A-D, a single slit 120 that is parallel to the machine direction of the film layer (FIG. 19A) often exhibits more puckering (FIG. 19C) than a slit 120 that is parallel to the cross direction of the film (FIGS. 19B and D). In at least some examples a slit 120 is oriented in a direction that is not parallel to the cross-direction of the film layer 116 (greater than 0 degrees and less than 180 degrees). The characteristics of the film 116 and the substrate layer 114 may also be chosen so that any opening of the flaps 310 is delayed until a certain amount of external stimulus (e.g., moisture) is reached; this may be achieved, for example, by selecting a substrate layer 114 with a level of stiffness that is high enough to initially resists bending due to the initial expansion of the film layer 116. In the above examples, the slits 120 may be formed in the composite structure 112 of the example shown in FIG. 1 having a substrate layer 114 and a film layer 116 or any other other composite structures described in or equivalent to the subject matter of this disclosure.

There may be several different ways to determine whether a film layer exhibits greater expansion in one or more dimensions, which can suggest which direction is a machine direction and which direction is a cross direction (e.g., of the film layer). For example, a composite can be marked with a reference line, and then a sample could be cut from the composite, such that the swatch or sample includes a first segment of the reference line and a second segment remains on the composite. Then, moisture could be applied to the sample, and the sample can be observed to determine in which direction the sample curls. The longitudinal axis of the curl can be noted (e.g., marked), which generally aligns with the machine direction, and by lining up the first segment with the second segment, the machine direction of the composite can be determined.

FIG. 4 depicts a first example opposite second face 410 of the trim piece 100 where the second face 410 is formed from the support layer 122. The support layer 122 is depicted as being secured to the composite structure 112 by way of securement areas 412 (e.g., stitching, adhesive, bond points) that extend along the perimeter edges of the support layer 122; however, in other example aspects, the securement areas may be provided at one or more portions other than the perimeter edges of the support layer 122. In example aspects, the plurality of slits 120 do not extend through the support layer 122. In the example shown in FIG. 4, the support layer 122 is formed from a mesh material or a spacer mesh material as is indicated by the enlarged view that shows openings or apertures 414. The construction shown in FIG. 4 may be useful for lightweight exercise apparel such as bras, tights, support tanks or tops, and the like.

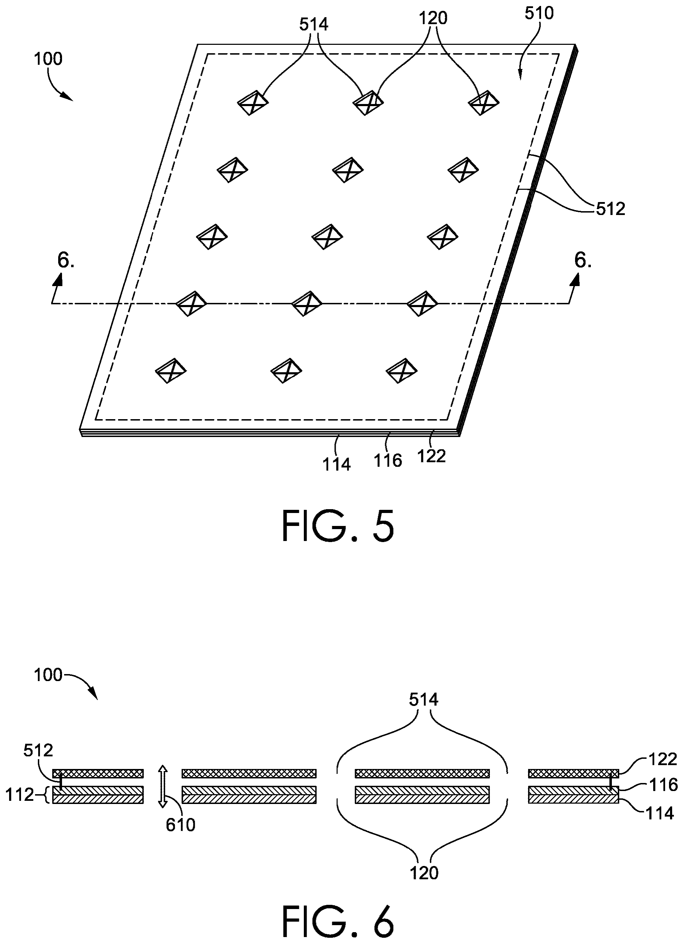

FIG. 5 depicts a second example opposite second face 510 of the trim piece 100 where the second face 510 is formed from the support layer 122. The support layer 122 is depicted as being secured to the composite structure 112 by way of securement areas 512 (e.g., stitching, adhesive, bond points) that extend along the perimeter edges of the support layer 122. In example aspects, the plurality of slits 120 do not extend through the support layer 122. In the example shown in FIG. 5, the support layer 122 is formed from a fleece material. The support layer 122 includes a plurality of openings 514 that are axially aligned with the plurality of slits 120. This is because, unlike a mesh material or a spacer mesh material that is inherently permeable due to its construction, fleece is not as permeable. The axial alignment of the plurality of slits 120 with the plurality of openings 514 facilitates perspiration and/or moisture vapor coming into contact with the film layer 116. The construction shown in FIG. 5 may be useful for insulative articles of apparel such as jackets, coats, mid-layers, and the like.

FIG. 6 is a cross-section of the trim piece 100 taken at cut line 6-6 of FIG. 5. FIG. 6 is provided to illustrate the axial alignment of the plurality of slits 120 of the composite structure 112 with the plurality of openings 514 of the support layer 122. For example, the plurality of slits 120 are aligned along axis 610 with the plurality of openings 514.

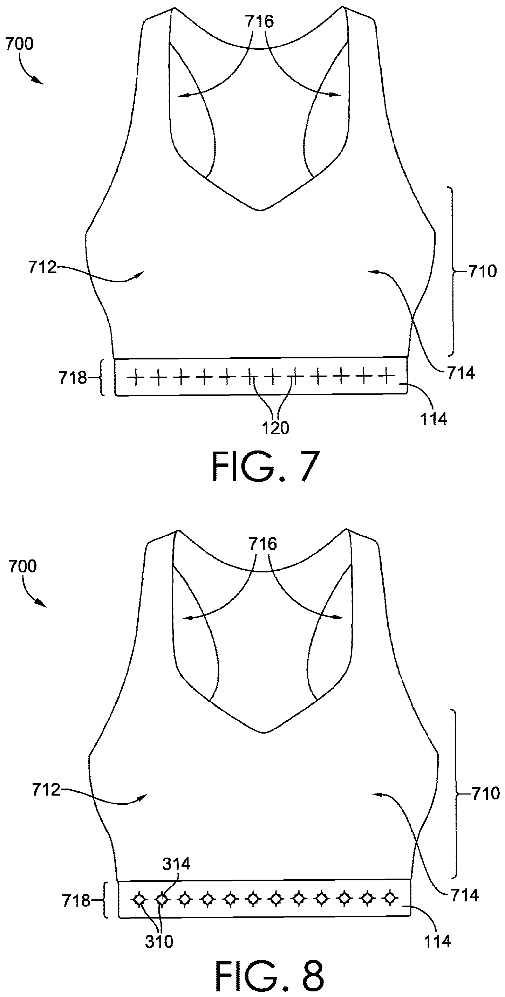

FIGS. 7 and 8 illustrate a first example use of the trim piece 100 in the form of a bra 700. FIG. 7 depicts the bra 700 before being exposed to an external stimulus, and FIG. 8 depicts the bra 700 after being exposed to an external stimulus. The depiction of the bra 700 is illustrative, and it is contemplated herein that the bra 700 may include other configurations than that shown. The bra 700 includes a front portion 710 with a first breast-covering portion 712 and a second breast-covering portion 714 each of which is configured to respectively cover a wearer's right breast and left breast. Shoulder straps 716 extend from an upper margin of the front portion 710 and are configured to extend over a wearer's shoulders. An underband 718 extends from a lower margin of the front portion 710 and is configured to encircle a torso area of a wearer.

In example aspects, the underband 718 is the trim piece 100 having the plurality of slits 120. The substrate layer 114 forms an outer-facing surface of the underband 718, and the support layer 122 forms an inner-facing surface of the underband 718 (not shown). In example aspects, the substrate layer 114 may include a lightweight knit or woven material suitable for use in athletic apparel, and the support layer 122 may include a mesh material or a spacer mesh material to further contribute to the lightweight features of the bra 700. The plurality of slits 120 are shown extending along the length of the underband 718.

FIG. 8 depicts the underband 718 after being exposed to moisture in the form of perspiration and/or moisture vapor produced by the wearer. The moisture travels through the support layer 122 and contacts the film layer 116 causing it to swell or dimensionally transform. The flaps 310 curl outward or away from the inner-facing surface of the underband 718 to form the through-passages 314 that facilitate the dissipation of the heat and/or moisture vapor produced by the wearer thereby helping to cool the wearer. When the wearer no longer is perspiring, the film layer 116 reverts to its non-swollen state and the flaps 310 close.

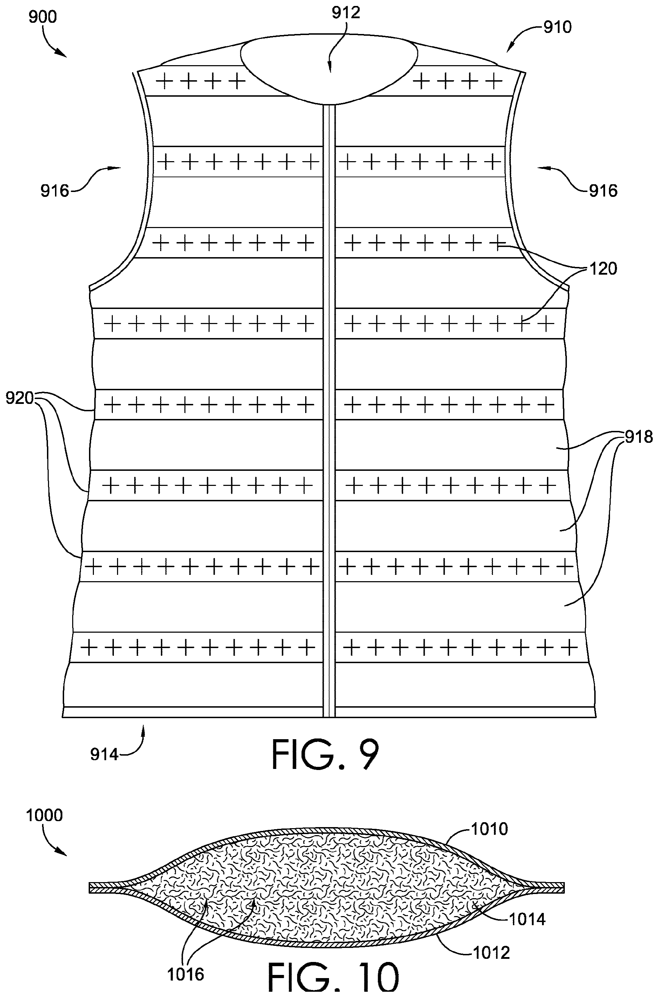

FIG. 9 depicts a second example use of the trim piece 100 in the form of an upper-body garment 900. Although shown as a vest, it is contemplated herein that the article may include any type of upper-body garment including a jacket, a coat, a hoodie, a pullover, and the like. The upper-body garment 900 includes a front torso portion 910 and a back torso portion (not shown) that together define a neck opening 912, a waist opening 914, and arm openings 916.

The upper-body garment 900 includes a plurality of baffles 918 that contain, in example aspects, a thermally insulating fill material such as down, loose synthetic fibers, a nonwoven sheet, and the like. An example baffle is shown in FIG. 10 and is indicated by reference numeral 1000. The baffle 1000 includes an outer layer 1010 and an inner layer 1012 that define a chamber or pocket 1014 that contains thermally insulating fill material 1016.

The upper-body garment 900 further includes a plurality of trim pieces 920 that are positioned between adjacent baffles 918 such that a respective trim piece 920 spaces apart adjacent baffles 918. The trim pieces 920 may be secured to the baffles 918 through various affixing technologies such as stitching, bonding, adhesives, and the like. The trim pieces 920 may be the trim piece 100 having the substrate layer 114, the film layer 116 secured to the substrate layer 114, and the support layer 122. Although FIG. 9 depicts the trim pieces 920 as positioned between every adjacent baffle 918, aspects contemplate herein that the trim pieces 920 may be positioned at discrete locations on the garment 900. For example, the trim pieces 920 may primarily be positioned at the front upper chest area and the upper back area of the garment 900. When the garment 900 is worn by a wearer, these areas may correspond to high heat and/or sweat-producing areas of the wearer as based on heat and sweat maps of the human body.

FIG. 9 depicts the upper-body garment 900 before being exposed to an external stimulus such that the plurality of slits 120 are closed helping to retain heat. In example aspects, to provide further warmth and/or insulative features to the upper-body garment 900, the support layer 122 may be formed from a fleece material having openings as depicted in FIG. 5.

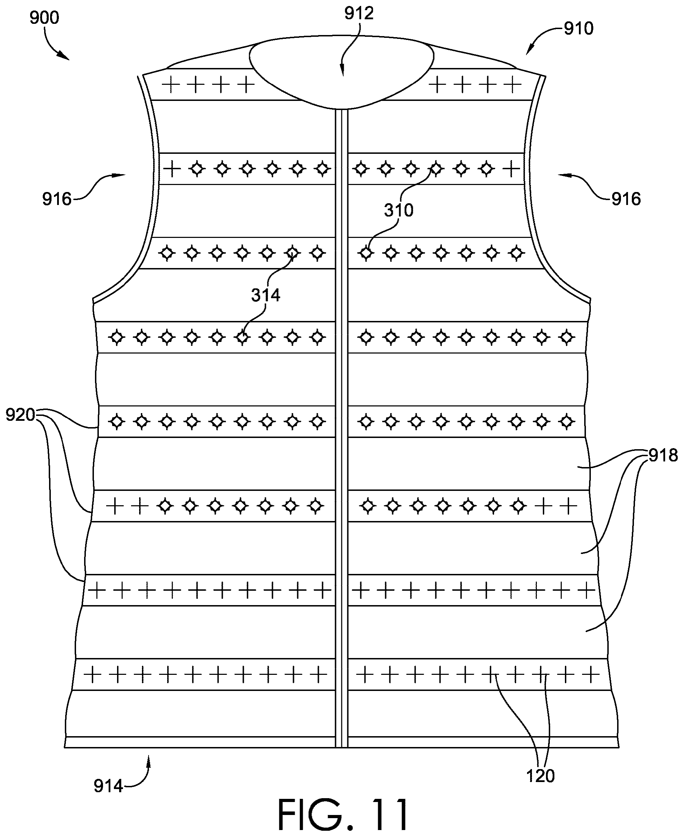

FIG. 11 depicts the upper-body garment 900 after being exposed to, for example, an external stimulus in the form of perspiration and/or moisture vapor produced by a wearer. The perspiration and/or moisture vapor passes through the openings in the support layer 122 and comes into contact with the film layer 116 causing it to swell and the flaps 310 to extend outward and away from the support layer 122 to form the through-passages 314 through which the moisture vapor may dissipate. In example aspects, depending upon where the perspiration or moisture vapor is produced, only some of the flaps 310 may open while other remain closed. For example, and as shown in FIG. 11, the trim pieces 920 located at the upper chest area of the upper-body garment 900 may be exposed to a greater amount of moisture vapor and/or perspiration as this area corresponds to a high heat and/or sweat producing area of a wearer. As such, the flaps 310 in this area may open while the flaps 310 located near the waist opening 914 remain closed helping to retain more warmth/heat in this area. The result is dynamic and customized venting based on individualized perspiration and moisture generation by the wearer.

Although an upper-body garment is depicted in FIGS. 9 and 11, aspects herein contemplate utilizing the trim piece 100 in additional ways. For example, the trim piece 100 may form a waistband and/or cuff of an upper-body garment or a waistband and/or cuff of a lower-body garment. The trim piece 100 may also be inserted into an upper-body garment or a lower-body garment as a panel to provide ventilation in desired areas of the respective garments. Any and all aspects, and any variation thereof, are contemplated as being within the scope herein.

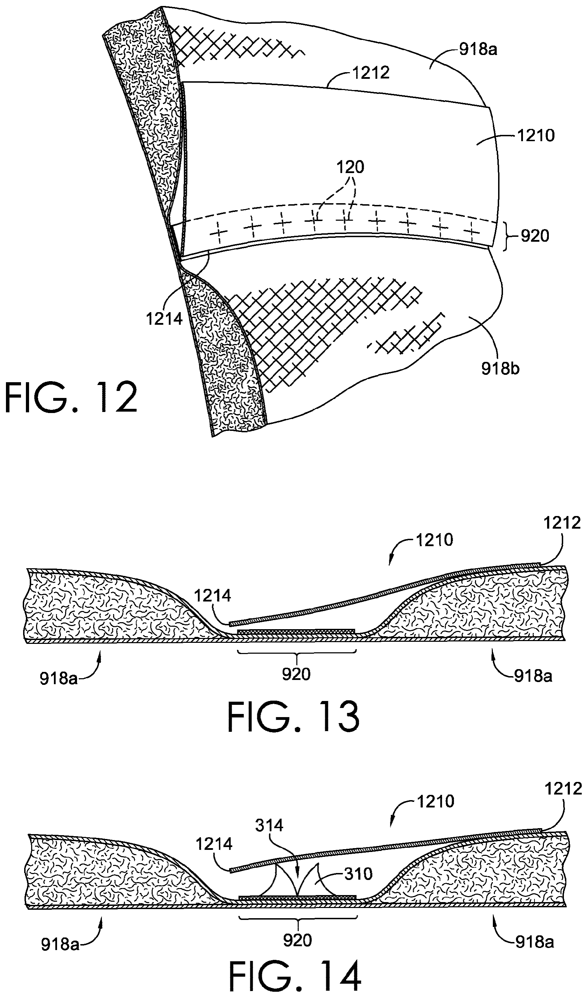

FIGS. 12-14 depict an example configuration that may optionally be used with respect to, for example, the upper-body garment 900 or any of the other garments or articles described herein. FIG. 12 illustrates a perspective cross-sectional view of a portion of the upper-body garment 900 before the trim piece 920 has been exposed to an external stimulus. FIG. 12 depicts two adjacent baffles 918a and 918b separated by the trim piece 920. A cover piece 1210 is depicted having a first linear edge 1212 secured or affixed to the baffle 918a using affixing technologies such as stitching, bonding, adhesives, and the like. An opposite second linear edge 1214 is unsecured or is not affixed to the upper-body garment 900. The second linear edge 1214 extends along a longitudinal length of the trim piece 920.

The cover piece 1210 may, in example aspects, be formed of a tightly woven material that is resistant to water and/or wind penetration. The cover piece 1210 may optionally be treated with a durable water repellant to provide enhanced water resistance features. The cover piece 1210, and more particularly, the second linear edge 1214 is positioned to partially or completely overlie or cover the trim piece 920 including the plurality of slits 120. This prevents moisture or precipitation from the external environment from entering the upper-body garment 900 by way of the slits 120.

A side view of this structure is shown in FIG. 13. Because the trim piece 920 has not been exposed to an external stimulus, the flaps 310 are laying flat. The second linear edge 1214 of the cover piece 1210 covers an outer-facing surface of the trim piece 920, and the first linear edge 1212 is shown secured to the baffle 918a.

Another side view of this structure is shown in FIG. 14 after the trim piece 920 has been exposed to moisture in the form of, for example, perspiration or moisture vapor produced by a wearer. The flaps 310 are shown extending outwardly. The flaps 310 mechanically push the cover piece 1210 outward from the so that the cover piece 1210 does not obstruct movement of air or moisture vapor through the through-passages 314 while still preventing precipitation from the external environment from entering the upper-body garment 900 by way of the through-passages 314. The cover piece may be sized and configured so that the second linear edge continues to cover the trim piece while the flaps 310 are in their extended positions.

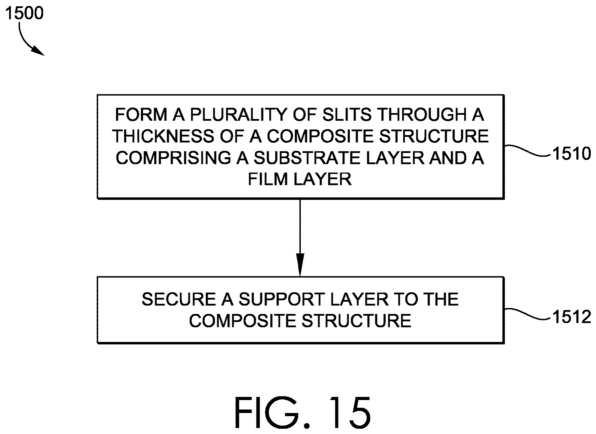

FIG. 15 depicts a flow diagram of an example method 1500 of forming a trim piece, such as the trim piece 100 for use in apparel. At a step 1510, a plurality of slits, such as the slits 120 are formed through a thickness of a composite structure, such as the composite structure 112 of the trim piece 100. The composite structure includes a substrate layer such as the substrate layer 114 and a film layer, such as the film layer 116 that is secured to a first surface of the substrate layer. The film layer is formed of a material that dimensionally transforms when exposed to moisture. For example, the film layer may swell when exposed to moisture.

At a step 1512, a support layer, such as the support layer 122, is secured to the composite structure such that a first surface of the support layer is in a face-sharing relationship with the film layer. In example aspects, the support layer may include a mesh material, a spacer mesh material, or other materials that have a high degree of air permeability. In other example aspects, the support layer may be formed from a fleece material having openings that are axially aligned with the plurality of slits formed through the composite structure.

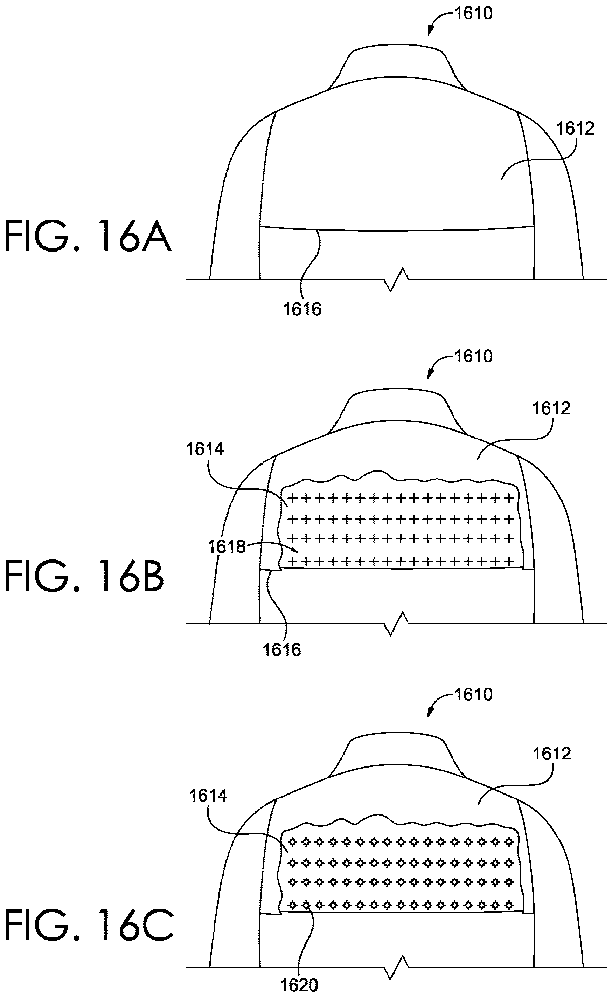

As indicated above, in some examples a composite including a film layer and substrate layer can be incorporated into a panel or portion of various types of garments. For example, referring to FIGS. 16A-16C, the composite can be incorporated into an upper-body garment 1610 (e.g., jacket, windbreaker, etc.), such as in an upper back portion of the upper-body garment 1610. In examples, the upper-body garment 1610 can include a multi-layer construction, including an outer layer 1612. In addition, as depicted via a cutaway view in FIGS. 16B and 16C (e.g., in which a portion of the outer layer 1612 is cutaway), a composite-layer panel 1614, which includes a film layer and a substrate layer can be arranged beneath the outer layer 1612. The film layer and the substrate layer can include any and all features described throughout this disclosure. In some examples, the upper-body garment 1610 can include a mesh layer, or other inner lining, beneath the composite-layer panel 1614 (e.g., between the composite-layer panel 1614 and the wearer when the upper-body garment 1610 is worn).

In some examples, the outer layer 1612 can include a bottom edge 1616 that extends lower than a lowermost row of slits 1618 (e.g., as compared to the lowermost row of slits 1618, the bottom edge 1616 is positioned further away from the collar of the upper-body garment 1610 and closer to the hem of the upper-body garment 1610). As such, the outer layer 1612 can, in some instances, reduce the likelihood of precipitation (e.g., from the external environment) or other environmental elements (e.g., debris) from entering the upper-body garment 1610 by way of the through passages 1620. In at least some examples, the outer layer 1612 can be treated with a DWR (durable water repellant or other surface treatment), which can also contribute to deflecting environmental elements away from the composite-layer panel 1614.

In examples, the outer layer 1612 is associated with drape characteristics that contribute to the outer layer 1612 operating as an effective shield against environmental elements, while also allowing for sufficient venting (e.g., by allowing the through passages 1620 to open). That is, as described in association with the cover piece 1210 in FIG. 14, the outer layer 1612 fits loosely enough over the composite-layer panel 1614 to allow the flaps to open when exposed to a stimulus.

Aspects of the present disclosure have been described with the intent to be illustrative rather than restrictive. Alternative aspects will become apparent to those skilled in the art that do not depart from its scope. A skilled artisan may develop alternative means of implementing the aforementioned improvements without departing from the scope of the present disclosure.

It will be understood that certain features and subcombinations are of utility and may be employed without reference to other features and subcombinations and are contemplated within the scope of the claims. Not all steps listed in the various figures need be carried out in the specific order described.

Further features, aspects and embodiments are provided below in the following items:
Item 1. A trim piece for use in apparel, the trim piece comprising: a composite structure comprising a substrate layer and a film layer that dimensionally transforms when exposed to moisture, the film layer secured to a first surface of the substrate layer, the composite structure including a plurality of slits that extend through a thickness of the composite structure.
Item 2. The trim piece of item 1, further comprising a support layer secured to the composite structure, the support layer in a face-sharing relationship with the film layer.
Item 3. The trim piece of item 1, wherein the substrate layer includes one of a knit textile, a non-woven textile, or a woven textile.
Item 4. The trim piece of item 1, wherein the film layer is a thermoplastic material.
Item 5. The trim piece of item 4, wherein the thermoplastic material is a thermoplastic polyester elastomer (TPEE).
Item 6. The trim piece of item 1, wherein an entirety of the film layer is secured to the first surface of the substrate layer.
Item 7. The trim piece of item 6, wherein the film layer is bonded to the substrate layer.
Item 8. The trim piece of item 1, wherein the support layer is secured to the composite structure along one or more perimeter edges of the support layer.
Item 9. The trim piece of item 1, wherein the support layer includes one of a mesh material or a spacer mesh material.
Item 10. The trim piece of item 1, wherein the support layer includes a fleece material.
Item 11. The trim piece of item 10, wherein the fleece material includes one or more openings, at least a portion of the one or more openings axially aligned with at least a portion of the plurality of slits.
Item 12. An apparel item comprising: a trim piece secured to at least a first portion of the apparel item, the trim piece comprising: a composite structure comprising a substrate layer and a film layer that dimensionally transforms when exposed to moisture, the film layer secured to a first surface of the substrate layer, the composite structure including a plurality of slits that extend through a thickness of the composite structure.
Item 13. The apparel item of item 12, further comprising a support layer secured to the composite structure, a first surface of the support layer in a face-sharing relationship with the film layer.
Item 14. The apparel item of item 12, wherein the apparel item is a bra and the trim piece is secured to a lower margin of a front portion of the bra such that the trim piece forms an underband of the bra.
Item 15. The apparel item of item 12, wherein the apparel item is a jacket.
Item 16. The apparel item of item 15, wherein the trim piece is secured between and spaces apart a first baffle containing a thermally insulating fill material and a second baffle containing a thermally insulating fill material.
Item 17. The apparel item of item 12, wherein an opposite second surface of the support layer is configured to be in a face-sharing relationship with a body surface of a wearer when the apparel item is worn.
Item 18. The apparel item of item 12, wherein when the film layer is exposed to moisture, one or more flaps formed by the plurality of slits extend in a z-direction away from the support layer.
Item 19. The apparel item of item 12, wherein the substrate layer includes one of a knit textile or a woven textile.
Item 20. The apparel item of item 12, wherein the film layer is a thermoplastic material.
Item 21. The apparel item of item 20, wherein the thermoplastic material is a thermoplastic polyester elastomer (TPEE).
Item 22. The apparel item of item 12, wherein the film layer is bonded to the substrate layer.
Item 23. A method of forming a trim piece for use in apparel, the method comprising: forming a plurality of slits through a thickness of a composite structure comprising a substrate layer and a film layer that dimensionally transforms when exposed to moisture, the film layer secured to a first surface of the substrate layer; and securing a support layer to the composite structure such that a first surface of the support layer is in a face-sharing relationship with the film layer.
Item 24. The method of forming the trim piece of item 23, wherein the support layer includes one of a mesh material, a spacer mesh material, or a fleece material.
Item 25. A composite laminate comprising: a substrate layer; a film layer that is a coupled to the substrate layer and that dimensionally transforms when exposed to moisture; and a slit extending entirely through at least the film layer, wherein the slit forms at least part of a through-passage through at least the film layer and wherein one side of the composite laminate is in fluid communication with the other side of the composite laminate through the through-passage.
Item 26. The composite laminate of item 25, wherein: a portion of the film layer proximate to the slit transitions from a first position to a second position when the film layer is exposed to moisture; and wherein the through passage is larger in the second position than when the portion is in the first position.
Item 27. The composite laminate of item 26, wherein, in the second position, the through-passage increases airflow between the first and the second sides of the composite laminate, as compared to when the portion is in the first position.
Item 28. The composite laminate of item 26, wherein the through-passage decreases in size when moisture is removed from the film layer.
Item 29. The composite laminate of item 26, wherein: wherein when the film layer is exposed to moisture, one or more flaps formed by the plurality of slits extend away from the support layer..
Item 30. The composite laminate of item 25, wherein, the slit comprises an edge of a portion of the composite laminate; and along the edge, the film layer is at least partially bonded to the substrate layer.
Item 31. The composite textile of item 25, wherein: the film layer comprises a machine direction and a cross direction, and wherein the slit is disposed on the film such that the slit is not parallel to the cross direction of the film.
Item 32. The composite laminate of item 31, wherein the slit is a first slit and said composite textile further comprises a second slit made through at least said film that intersects the first slit at an angle.
Item 33. The composite laminate of item 32, wherein the first slit is perpendicular to the cross direction of the film and the second slit is parallel to the cross direction of the film.
Item 34. The composite laminate of item 33, wherein the slits form a plurality of portions that move to a substantially same extent when the film layer is exposed to moisture.
Item 35. The composite laminate of item 32, wherein, when exposed to moisture, an edge of the composite laminate associated with the first slit moves to a larger extent in a z-direction than an edge of the composite laminate associated with the second slit.
Item 36. The composite laminate of item 31, wherein the substrate layer is a textile and comprises a machine direction and a cross direction, and the machine direction of the film layer is parallel to the machine direction of the textile.
Item 37. The composite laminate of item 31, wherein the substrate layer is a textile and comprises a machine direction and a cross direction, and the machine direction of the film layer is parallel to the cross direction of the textile.
Item 38. The composite laminate of item 31, wherein the substrate layer is a textile and comprises a machine direction and a cross direction, and the machine direction of the film layer is angled relative to the machine direction of the textile.
Item 39. The composite laminate of item 25, wherein the textile comprises a knit material.
Item 40. The composite laminate of item 25, wherein the textile comprises a non-woven material.
Item 41. The composite laminate of item 25, wherein the textile comprises a woven material.
Item 42. The composite textile of item 32, wherein the first slit and the second slit form a shape chosen from one of a T-shape, an L-shape, a plus-sign shape, an X-shape, and any combination thereof.
Item 43. The composite textile of item 25, wherein the slit has a curvilinear shape.
Item 44. An upper-body garment comprising: a composite laminate comprising: a substrate layer comprising an inner face and an outer face; a film layer that is secured to the inner face of the substrate layer and that dimensionally transforms when exposed to moisture; and a plurality of slits that extend through a thickness of at least the film layer of the composite laminate; and an outer layer proximate to the outer face of the substrate layer.
Item 45. The upper-body garment of item 44, wherein the upper-body garment includes a back portion configured to cover a back of a wearer when the upper-body garment is worn, and wherein the composite laminate is positioned in an upper region of the back portion.
Item 46. The upper-body garment of item 44, further comprising an inner lining adjacent the film layer and configured to be positioned between the film layer and a wearer when the upper-body garment is worn.
Item 47. The upper-body garment of item 44, wherein the outer layer comprises a durable water repellant (DWR) surface treatment on an outer face.
Item 48. The upper-body garment of item 44, wherein the outer layer comprises a bottom edge, which comprises at least a segment that is positioned lower that the plurality of slits.
Item 49. A garment comprising: a composite structure comprising: a substrate layer and a film layer that dimensionally transforms when exposed to moisture, the film layer secured to a first surface of the substrate layer, the composite structure including a plurality of slits that extend through a thickness of the composite structure; and a support layer secured to the composite structure, the support layer in a face-sharing relationship with the film layer.
Item 50. The garment of item 49, wherein the film layer is a thermoplastic material.
Item 51. The garment of item 50, wherein the thermoplastic material is a thermoplastic polyester elastomer (TPEE).
Item 52. The garment of item 49, wherein the garment is an upper body garment and the composite structure is positioned in an upper back portion.
Item 53. The garment of item 49, wherein the support layer includes one of a mesh material or a spacer mesh material.
Item 54. The garment of item 49, wherein the support layer includes one or more openings, at least a portion of the one or more openings axially aligned with at least a portion of the plurality of slits.

## Claims

1. An apparel item comprising: a trim piece (100) secured to at least a first portion of the apparel item, the trim piece (100) comprising: a composite structure (112) comprising a substrate layer (114), and a film layer (116) that dimensionally transforms when exposed to moisture, the film layer (116) secured to a first surface of the substrate layer (114), the composite structure (112) including a plurality of slits (120) that extend through a thickness of the composite structure (112),
**characterized by** a cover piece (1210) positioned external to the trim piece and adapted to partially or completely overlie the trim piece (100) with its plurality of slits (120), wherein, after the trim piece (100) is exposed to moisture, one or more flaps (310) formed by the plurality of slits (120) extend outwardly.

2. The apparel item of claim 1, wherein at least a portion of the cover piece (1210) is mechanically pushed by the one or more flaps (310) outwardly when the one or more flaps (310) open.

3. The apparel item of claim 1 or 2, further comprising a support layer (122) secured to the composite structure (112), a first surface of the support layer (122) in a face-sharing relationship with the film layer (116).

4. The apparel item of any one of claims 1-3, wherein the apparel item is a bra (700) and the trim piece (100) is secured to a lower margin of a front portion of the bra (700) such that the trim piece (100) forms an underhand of the bra (700).

5. The apparel item of any one of claims 1-4, wherein the apparel item is a jacket (900).

6. The apparel item of any one of claims 1-5, wherein the trim piece (100) is secured between and spaces apart a first baffle (918) containing a thermally insulating fill material (1016) and a second baffle (918) containing a thermally insulating fill material (1016).

7. The apparel item of any one of claims 1-6, wherein an opposite second surface of the support layer (122) is configured to be in a face-sharing relationship with a body surface of a wearer when the apparel item is worn.

8. The apparel item of any one of claims 1-7, wherein when the film layer (116) is exposed to moisture, one or more flaps (310) formed by the plurality of slits (120) extend in a z-direction away from the support layer (122).

9. The apparel item of any one of claims 1-8, wherein the substrate layer (114) includes one of a knit textile or a woven textile.

10. The apparel item of any one of claims 1-9, wherein the film layer (116) is a thermoplastic material.

11. The apparel item of claim 10, wherein the thermoplastic material is a thermoplastic polyester elastomer (TPEE).

12. The apparel item of any one of claims 1-11, wherein the film layer (116) is bonded to the substrate layer (114).

13. A method of forming an apparel item according to any one of claims 1-12, the method comprising: forming a plurality of slits (120) through a thickness of a composite structure (112) comprising a substrate layer (114) and a film layer (116) that dimensionally transforms when exposed to moisture, the film layer (116) secured to a first surface of the substrate layer (114).

14. The method of claim 13, further comprising securing a support layer (122) to the composite structure (112) such that a first surface of the support layer (122) is in a face-sharing relationship with the film layer (116).

15. The method of claim 14, wherein the support layer (122) includes one of a mesh material, a spacer mesh material, or a fleece material.
